# EUROPEAN PATENT APPLICATION

(11) **EP 4 474 849 A1**
(43) Date of publication of application: **11.12.2024**
(21) Application number: 24173110.8
(22) Date of filing: 29.04.2024
(51) Int. Cl.: G01S 5/00, G01S 5/02, G01S 19/21, G08G 5/00, G08G 5/06, G01S 19/15, G08G 5/02, G01C 21/00, H04W 4/024

(54) **5G-BASED LANDING, NAVIGATION, AND POSITION AUGMENTATION SYSTEMS AND METHODS**

(30) Priority: 22.05.2023 IN 202311035398; 17.07.2023 US 202318353734
(71) Applicant: Honeywell International Inc., Charlotte, NC 28202 (US)
(72) Inventor: KUMAR, Perumal, Charlotte, 28202 (US); LENKA, Sanjay, Charlotte, 28202 (US)
(74) Representative: Haseltine Lake Kempner LLP

(57) **Abstract**

Systems and methods for 5G based landing, navigation, and position augmentation are described herein. In one example, a method includes receiving 5G signals from a plurality of 5G base station and processing the received 5G signals from a plurality of 5G base stations to obtain 5G position information. The method further includes receiving position correction information for the 5G position information from a ground reference station. The method further includes determining a position of a vehicle based on the 5G position information and the position correction information. The method further includes providing navigation guidance to the vehicle based on the determined position of the vehicle.

## Description

### CROSS-REFERENCE TO RELATED APPLICATIONS

This application claims priority to and benefit of Indian Provisional Application No. 202311035398, filed on May 22, 2023, titled "5G-BASED LANDING, NAVIGATION, AND POSITION AUGMENTATION SYSTEMS AND METHODS," the contents of which are incorporated herein by reference in their entirety.

### BACKGROUND

For aircraft, landing is a critical stage for flight operation. The landing procedure is particularly challenging at night and during other low visibility conditions. Currently, aircraft typically utilize GNSS receivers to determine the position of the aircraft and at least one system (for example, an Instrument Landing System (ILS), Ground Based Augmentation System (GBAS), Satellite Based Augmentation System (SBAS), Microwave Landing System (MLS), or the like) to aid or augment the GNSS measurements for a landing procedure. Availability of GNSS signals is becoming more of a concern due to frequent GNSS outages (for example, due to GNSS denied environments or GNSS spoofing), so it is possible that GNSS positioning and landing guidance may be unavailable or unreliable in some circumstances. Further, the landing guidance systems generally require both expensive infrastructure for ground installations to provide reference signals to an aircraft and expensive systems onboard the aircraft to receive and utilize the reference signals from the ground installations. It is likely that small or unmanned aircraft will not include these expensive systems due to size or cost constraints even though it is possible that those systems may be necessary to ensure safe landing in certain conditions.

For at least the reasons above, and for further reasons discussed herein, there is a need for a more cost-effective and reliable system for determining a position of vehicles and providing landing and navigation guidance to vehicles.

### SUMMARY

In an aspect, a method is described herein. The method includes receiving 5G signals from a plurality of 5G base stations and processing the received 5G signals from a plurality of 5G base stations to obtain 5G position information. The method further includes receiving position correction information for the 5G position information from a ground reference station. The method further includes determining a position of a vehicle based on the 5G position information and the position correction information. The method further includes providing navigation guidance to the vehicle based on the determined position of the vehicle.

In another aspect, a system is described herein. The system includes at least one receiver configured to: receive 5G signals from a plurality of 5G base stations and receive position correction information for 5G position information from a ground reference station. The system further includes one or more processors communicatively coupled to the at least one receiver. The one or more processors are configured to process the received 5G signals from a plurality of 5G base stations to obtain 5G position information. The one or more processors are further configured to determine a position of a vehicle that includes the system based on the 5G position information and the position correction information. The one or more processors are further configured to provide navigation guidance to the vehicle that includes the system based on the determined position of the vehicle.

In another aspect, a system is described herein. The system includes a plurality of reference receivers each having a respective known location. Each reference receiver is configured to receive 5G signals from a plurality of 5G base stations and process the received 5G signals from a plurality of 5G base stations to obtain 5G position information. Each reference receiver is further configured to determine an offset between the 5G position information and the respective known location of the reference receiver. The system further includes a ground reference station communicatively coupled to the plurality of reference receivers. The ground reference station is configured to receive the respective determined offset from each reference receiver of the plurality of reference receivers. The ground reference station is further configured to determine position correction information for the 5G position information based on the received determined offsets from the plurality of reference receivers. The ground reference station is further configured to broadcast the position correction information for the 5G position information.

### BRIEF DESCRIPTION OF THE DRAWINGS

Understanding that the drawings depict only some embodiments and are not therefore to be considered limiting in scope, the exemplary embodiments will be described with additional specificity and detail using the accompanying drawings, in which:
FIG. 1 is a block diagram of an example system;
FIG. 2A is a block diagram of an example 5G based positioning system;
FIG. 2B is a block diagram of an example reference receiver;
FIG. 2C is a block diagram of an example ground/reference station;
FIG. 3 illustrates a flow diagram of an example method of 5G based navigation augmentation;
FIG. 4 illustrates a flow diagram of an example method of determining and providing position correction information for 5G position information;
FIG. 5 illustrates a flow diagram of an example method of detecting GNSS error or GNSS spoofing; and
FIG. 6 illustrates a flow diagram of an example method of multi-operator 5G based navigation augmentation.

In accordance with common practice, the various described features are not drawn to scale but are drawn to emphasize specific features relevant to the example embodiments.

### DETAILED DESCRIPTION

In the following detailed description, reference is made to the accompanying drawings that form a part hereof, and in which are shown by way of illustration specific illustrative embodiments. However, it is to be understood that other embodiments may be utilized, and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In telecommunications, fifth generation (5G) technology is currently being deployed worldwide by wireless service providers to support their broadband cellular networks. A few of the features offered with 5G services include positioning services that provide an accurate position of a 5G receiver (for example, with a guaranteed accuracy in the range of centimeters) and latency of less than 50 milliseconds. Signal reception for 5G signals is highly feasible for ground and sea traversing vehicles and also around 1 kilometer altitude where aircraft and other aerial vehicles are positioned during an approach phase for landing and navigation for multiple applications.

The techniques described herein include a 5G based positioning system on a vehicle that determines the position of the vehicle using 5G position information from a plurality of 5G base stations and position correction information from a ground reference station. The determined position is accurate enough to enable an aircraft to execute a landing operation without using GNSS signals or expensive ILS/GLS systems. The systems and methods described herein can be used for navigation at lower altitude, navigation on the ground (for example, during taxiing and parking), and safety alerts for aircraft wing tip damage while parking or taking the aircraft out of the hangar.

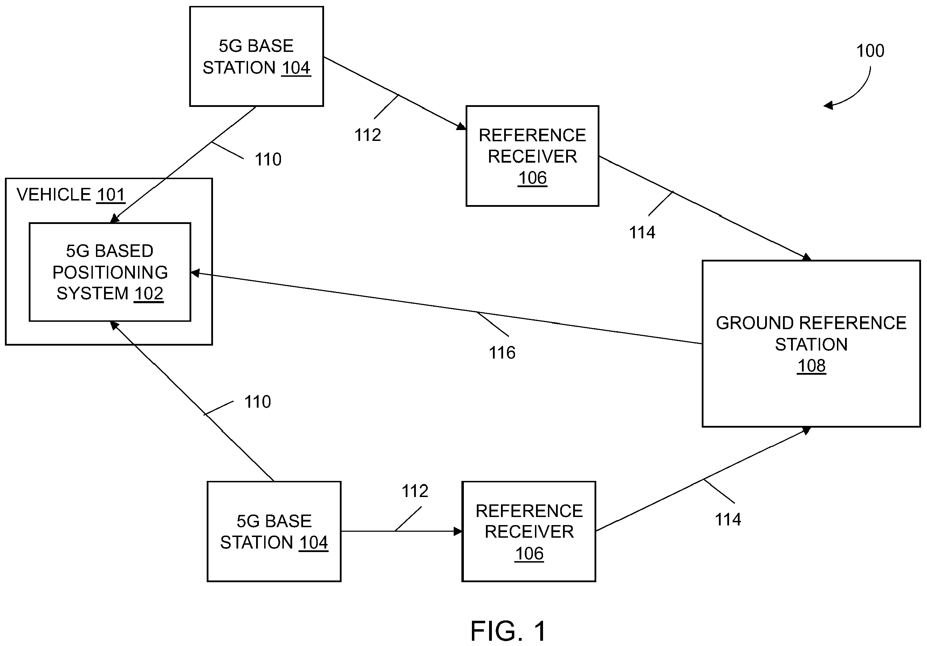

FIG. 1 illustrates a block diagram of an example system 100 in which the techniques for 5G based landing, navigation, and position augmentation discussed herein can be implemented. In the example shown in FIG. 1, the system 100 includes a vehicle 101 that includes a 5G based positioning system 102, a plurality of reference receivers 106, and one or more ground reference stations 108. The components of the system 100 are configured to receive and utilize 5G signals from a plurality of 5G base stations 104 in order to determine an accurate position of the vehicle 101 and to provide navigation guidance to the vehicle 101. While a particular number of 5G base stations 104, reference receivers 106, and ground reference stations 108 are shown in FIG. 1, it should be understood that this is merely one example and that a different number of 5G base stations (two or more), reference receivers 106 (two or more), and ground reference stations 108 (one or more) could be utilized for the techniques described herein.

In some examples, the vehicle 101 may include an aircraft, and an aircraft is referenced to explain some of the principles described throughout the disclosure. However, the term vehicle is intended to include all such vehicles falling within the ordinary meaning of the term as understood by one having ordinary skill in the art, which includes, but is not limited to, aerial traversing vehicles (for example, commercial, non-commercial, or recreational aircraft), unmanned vehicles (for example, drones, urban air mobility vehicles), ground traversing vehicles (for example, automobiles, trucks, motorcycles), and sea traversing vehicles (for example, commercial or recreational boats/ships). In some examples, the vehicle 101 is a Part 23 or Part 25 aircraft.

In the example shown in FIG. 1, the vehicle 101 includes a 5G based positioning system 102. The 5G based positioning system 102 can be included inside or on the vehicle 101 depending on the type of vehicle 101. The 5G based positioning system 102 is configured to receive and process 5G signals from 5G base stations 104 during operation to obtain 5G position information. The 5G position information indicates a position of the 5G based positioning system 102 that is determined by one or more components of the network that includes the 5G base stations 104. The 5G base stations 104 each wirelessly transmit the 5G signals to the 5G based positioning system 102 over a wireless communication link 110.

While the 5G position information can provide centimeter level accuracy for position in some circumstances, the confidence level for the 5G position information is not sufficient to enable an aircraft to utilize the 5G position information for safety critical operations (for example, landing operations) that require greater protection levels. To augment the 5G position information and enable the 5G position information to be utilized for safety critical operations, the example system 100 in FIG. 1 includes reference receivers 106 and a ground reference station 108 that verify the operation of the 5G base stations 104 and provide position correction information to the 5G based positioning system.

In the example shown in FIG. 1, each reference receiver 106 is also configured to receive and process 5G signals from the 5G base stations 104 during operation to obtain 5G position information. The 5G position information indicates a position of the reference receiver 106 that is determined by one or more components of the network that includes the 5G base stations 104. The 5G base stations 104 wirelessly transmit the 5G signals to reference receivers 106 over wireless communication links 112. While the reference receivers 106 in FIG. 1 are shown as only receiving 5G signals from a single 5G base station 104, it should be understood that the reference receivers 106 can also be configured to receive 5G signals from multiple 5G base stations 104.

In some examples, each reference receiver 106 is configured to determine an offset between the 5G position information from the 5G base stations 104 and a known (for example, surveyed) location of that reference receiver 106. In such examples, the reference receivers 106 are configured to provide the determined offsets to the ground reference station 108 over a communication link 114 for further processing to determine position correction information for the 5G position information. In some examples, the reference receivers 106 are configured to wirelessly transmit a respective determined offset to the ground reference station 108 over a wireless communication link 114. In other examples, one or more reference receivers 106 are configured to transmit a respective determined offset to the ground reference station 108 over a wired communication link 114.

In some examples, the ground reference station 108 is configured to determine position correction information for the 5G position information based on the determined offsets from the reference receivers 106. In some examples, the ground reference station 108 is also configured to determine health information for one or more of the 5G base stations 104 based on the determined offsets from the reference receivers 106.

In the example shown in FIG. 1, the ground reference station 108 is configured to wirelessly broadcast the position correction information to the 5G based positioning system 102 over a wireless communication link 116. In some examples, the ground reference station 108 is further configured to provide health information about one or more of the 5G base stations 104 over a wireless communication link 116. In some examples, the position correction information and the health information about one or more of the 5G base stations 104 is provided in the same broadcast message. In other examples, the position correction information and the health information are provided in separate broadcast messages to the 5G based positioning system 102.

In some examples, the 5G based positioning system 102 and the reference receivers 106 are subscribed to a single operator, and all of the 5G signals utilized by the system 100 are received from the 5G base stations 104 of the single operator. In other examples, the 5G based positioning system 102 and the reference receivers 106 are subscribed to multiple operators, and the 5G signals utilized by the system 100 are received from the 5G base stations 104 of the multiple operators. In some examples, one or more of the 5G base stations 104 are configured to provide dedicated service for the 5G based landing, navigation, and/or positioning techniques described herein. In such examples, the dedicated 5G base stations 104 can be specifically configured to not serve mobile devices or other user equipment.

In the example shown in FIG. 1, the 5G based positioning system 102 is configured to receive the position correction information for the 5G position information from one or more ground reference stations 108. In some examples, the 5G based positioning system 102 is further configured to receive health information for one or more of the 5G base stations 104 from the ground reference station 108.

The 5G based positioning system 102 is configured to determine a position of the vehicle 101 based on the 5G position information and the position correction information. In some examples, the 5G based positioning system 102 is configured to determine the position of the vehicle 101 based on the health information for one or more of the 5G base stations 104 in addition to the 5G position information and the position correction information. For example, the 5G based positioning system 102 is configured to utilize 5G position information from base stations 104 that are indicated to be operating normally when determining the position of the vehicle 101.

Based on the position of the vehicle 101, the 5G based positioning system 102 is further configured to provide navigation guidance to the vehicle 101. In some examples, the navigation guidance includes landing vertical guidance, landing lateral guidance, navigation guidance while the vehicle is in the air (for example, at lower altitude), and/or navigation guidance while the vehicle 101 is on the ground.

In some examples, the 5G based positioning system 102 is configured to receive the position correction information from one or more reference receivers 106 in addition to, or instead of, the position correction information from the ground reference station 108. In some such examples, the one or more reference receivers 106 configured to provide the position correction information to the 5G based positioning system 102 also receive offset information from other reference receivers 106 and operate in a manner similar to the ground reference station 108.

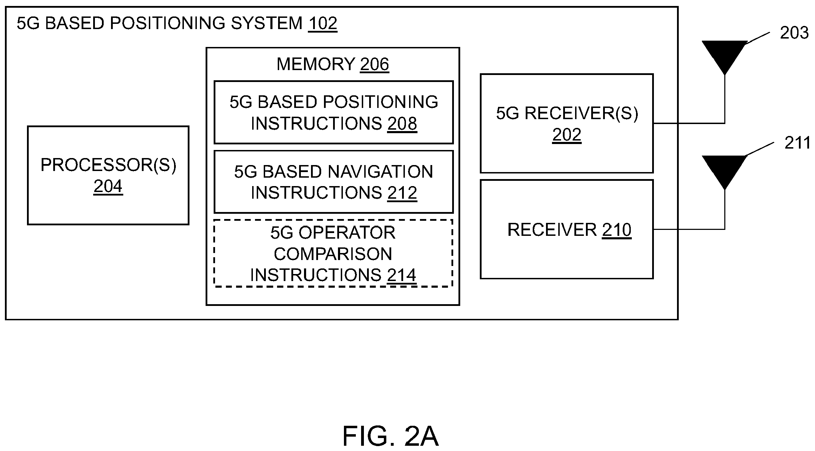

FIG. 2A is a block diagram of an example 5G based positioning system 102. In the example shown in FIG. 2A, the 5G based positioning system 102 includes one or more 5G receivers 202 and one or more processors 204 communicatively coupled to the one or more 5G receivers 202 and a memory 206.

In the example shown in FIG. 2A, the 5G receiver 202 is communicatively coupled to at least one antenna 203 and configured to wirelessly receive 5G signals from the 5G base stations 104 via the antenna 203. In some examples, the 5G receiver 202 is subscribed to a single operator (for example, VERIZON, AT&T, etc.) and is configured to receive 5G signals from the single cellular operator. In such examples, the 5G receiver 202 and the antenna 203 are specifically configured to receive and process signals using the frequency band(s) and protocols for the single cellular operator.

In the example shown in FIG. 2A, the memory 206 includes 5G based positioning instructions 208. When executing the 5G based positioning instructions 208, the one or more processors 204 of the 5G based positioning system 102 are configured to receive the 5G signals from the 5G receiver 202 and process the 5G signals to obtain the 5G position information. In some examples, processing the 5G signals includes demodulating, decoding, and otherwise processing the 5G signals to obtain 5G position information indicating a position of the 5G receiver 202 that is determined by one or more components of the network that includes the 5G base stations 104. In some examples, processing the 5G signals further includes transforming the 5G position information indicating a position of the 5G receiver 202 to a position of the vehicle 101 that includes the 5G receiver 202. For example, the position of the 5G receiver 202 can be transformed to a position of the vehicle 101 (or position of components of the vehicle 101) based on a known relationship between the position of the 5G receiver 202 at the vehicle 101 (or components of the vehicle 101).

In the example shown in FIG. 2A, the 5G based positioning system 102 further includes another receiver 210 communicatively coupled to at least one antenna 211 and configured to wirelessly receive position correction information from a ground reference station 108 via the antenna 211. In some examples, the receiver 210 and the antenna 211 are specifically configured to receive and process signals using the frequency band(s) and protocols utilized by the ground reference station 108 to broadcast the position correction information. In some such examples, the frequency band(s) and protocols utilized by the ground reference station 108 are separate from and distinct from those utilized by the 5G base stations 104.

When executing the 5G based positioning instructions 208, the one or more processors 204 of the 5G based positioning system 102 are further configured to receive and process the position correction information from the receiver 210. In some examples, processing the signals received from the ground reference station 108 includes demodulating, decoding, and otherwise processing the received signals to obtain the position correction information, which includes corrections and/or error information for the 5G position information that is received from the 5G base stations 104.

When executing the 5G based positioning instructions 208, the one or more processors 204 of the 5G based positioning system 102 are further configured to determine a position of the vehicle 101 based on the 5G position information from the 5Gbase stations 104 and the position correction information from the ground reference station 108. In some examples, the one or more processors 204 of the 5G based positioning system 102 are configured to adjust the 5G position information using the position correction information when determining the position of the vehicle 101. For example, the 5G based positioning system 102 can adjust a latitude, a longitude, and/or an altitude of the 5G position information based on the position correction information.

In some examples, when executing the 5G based positioning instructions 208, the one or more processors 204 of the 5G based positioning system 102 are configured to determine the position of the vehicle 101 using health information about the one or more 5G base stations 104. For example, the one or more processors 204 can discard 5G position information from a particular 5G base station 104 if the ground reference station 108 indicates that the particular 5G base station 104 is malfunctioning or providing overly inaccurate 5G position information.

In the example shown in FIG. 2A, the memory 206 further includes 5G based navigation instructions 212. When executing the 5G based navigation instructions 212, the one or more processors 204 are configured to provide navigation guidance to the vehicle 101 based on the determined position of the vehicle 101. In some examples, the navigation guidance is provided to a pilot of the vehicle 101 via one or more display devices on the vehicle 101 that are communicatively coupled to the 5G based positioning system 102. In some examples, the navigation guidance is provided to a control system of the vehicle 101 that is communicatively coupled to the 5G based positioning system 102.

In some examples, providing navigation guidance to the vehicle 101 includes providing landing vertical guidance or landing lateral guidance. In such examples, the 5G base stations 104, reference receivers 106, and ground reference station 108 are positioned near a landing area (for example, airport or airstrip). For example, the 5G base stations 104, reference receivers 106, and the ground reference station 108 are positioned within 50 nautical miles of the landing area.

In some examples, the landing vertical guidance and the landing vertical guidance are determined based on Precision Approach Region (PAR) data stored in the memory 206 or in another memory on the vehicle 101. The PAR data can include different PAR critical points around the runway and a glidepath for the runway. In some examples, the PAR data includes information that is runway specific, so the PAR data used to provide the landing vertical guidance or landing lateral guidance is selected based on a particular runway that the vehicle 101 is landing on. For example, the runway selection can be similar to selecting GLS, SBAS, or Localizer Performance with Vertical Guidance (LPV) channels through received ARINC Label 033 (for example, for Part 23 and 25 aircraft). In some examples, runway selection also includes an authentication procedure to ensure that the correct runway is being selected for landing.

In some examples, the landing vertical guidance indicates a vertical deviation of the position of the vehicle 101 from the glidepath for the runway. In some examples, the landing lateral guidance indicates a horizontal deviation of the position of the vehicle 101 from the glidepath for the runway. In some examples, when executing the 5G based navigation instructions 212, the one or more processors 204 are configured to output the landing vertical guidance and landing lateral guidance to one or more display devices in the cockpit of the vehicle 101 in a format similar to that used with II,S/GLS systems. For example, the landing vertical guidance can be provided with A429 Label 174 and the landing lateral guidance can be provided with A429 Label 173 to a localizer/glidescope course deviation indicator (CDI) in the cockpit of the vehicle 101. In some examples, the landing vertical guidance and the landing lateral guidance are provided at a refresh rate of 50 ms or less. Other customized outputs can also be used depending on the display device and/or control inputs of the vehicle 101.

In some examples, providing navigation guidance to the vehicle 101 includes providing navigation guidance to the vehicle 101 while the vehicle 101 is in the air. In such examples, the 5G base stations 104, reference receivers 106, and ground reference station 108 are positioned near a flightpath of the vehicle 101. For example, the 5G base stations 104, reference receivers 106, and ground reference station 108 are positioned between an origin location and a destination location and in proximity to designated flightpaths between the origin location and the destination location for vehicles 101.

In some examples, the air navigation guidance is determined based on flightpath data stored in the memory 206 or in another memory on the vehicle 101. In some examples, the flightpath data can be specific for the current flight plan of the vehicle 101 and indicate the designated route between the origin location and the destination location for the flight plan. In some examples, the navigation guidance includes heading and/or altitude information for the vehicle 101 to follow the flightpath designated in the flight plan for the vehicle 101.

In some examples, providing navigation guidance to the vehicle 101 includes providing navigation guidance to the vehicle 101 while the vehicle 101 is on the ground. In such examples, the 5G base stations 104, reference receivers 106, and ground reference station 108 are positioned near a route traversed by the vehicle 101 on the ground. For example, the 5G base stations 104 can be positioned near an airport and in proximity to designated routes for the vehicle 101 to taxi to a gate or hangar.

In some examples, the ground navigation guidance is determined based on route data and/or obstacle data stored in the memory 206 or in another memory on the vehicle 101. In some examples, the route data can be specific for the stage of travel of the vehicle 101 and indicate the designated route to the gate or hanger from a particular runway. In some examples, the obstacle data can be specific for the location and indicate known positions of permanent structures. In some examples, the navigation guidance includes directions for the vehicle 101 to follow the designated route. In some examples, the ground navigation guidance further includes wing tip warnings. In such examples, the obstacle data includes a location of the doors of the hangar, and the 5G based positioning system 102 is configured to determine the position of the wing tips based on the determined position of the vehicle 101. If the determined position of the wing tips is within a threshold distance of the hangar door, then an alert is issued to the pilot of the vehicle 101.

The vehicle 101 will most likely also include a GNSS receiver that is configured to receive GNSS signals from a plurality of GNSS satellites via one or more GNSS antennas and/or an inertial navigation system (INS) configured to determine a position of the vehicle 101 based on inputs from a plurality of inertial sensors. In some examples, the 5G based positioning system 102 is configured to receive a position of the vehicle 101 determined using GNSS signals and/or the measurements from inertial sensors. In other examples, the 5G based positioning system 102 is configured to output the determined position of the vehicle 101 to a navigation system that is also configured to receive the position of the vehicle 101 determined using GNSS signals and/or the measurements from inertial sensors.

In some examples, the 5G based positioning system 102 or the navigation system of the vehicle 101 is configured to integrate the position determined using the 5G position information and position correction information with the positions determined using the GNSS and/or INS. In some such examples, the navigation system of the vehicle 101 includes a Kalman filter or other filter than is configured to receive the 5G position along with the GNSS position and/or INS position and combine the positions using averaging, weights, filtering, etc. to determine an overall position of the vehicle 101.

In some examples, the 5G based positioning system 102 or the navigation system of the vehicle 101 is configured to compare the 5G position with the positions determined using the GNSS signals and/or INS signals to detect excess mismatch. In some such examples, excess mismatch is detected when the difference in the position determined using the 5G position information differs from the position determined using GNSS and/or INS signals by an amount that exceeds a threshold. In some examples, the threshold is predetermined based on safety requirements, accuracy thresholds, or other factors. In some examples, when the position determined using the 5G position information and the position determined using the INS signals matches (for example, are within a threshold range of each other), and the position determined using GNSS signals does not match the other positions, the 5G based positioning system 102 or the navigation system of the vehicle 101 can output an error signal or alert indicating that GNSS malfunctions (for example, GNSS spoofing) are occurring. In some such examples, the navigation system of the vehicle 101 is configured to determine the overall position of the vehicle 101 without GNSS signals or severely reducing the weight applied to GNSS signals.

As discussed above, in some examples, the 5G based positioning system 102 is subscribed to multiple operators, and the 5G signals utilized by the system 100 are received from the 5G base stations 104 of the multiple operators. In such examples, the 5G based positioning system 102 also includes additional 5G receivers that are communicatively coupled to at least one antenna 203 and configured to wirelessly receive 5G signals from the plurality of 5G base stations 104 via the antenna 203. In some examples, 5G receiver 202 is subscribed to a second operator that is different than the first operator and is configured to receive 5G signals from the second operator. In such examples, the 5G receiver 202 and the antenna 203 are specifically configured to receive and process signals using the frequency band(s) and protocols for the second operator.

When executing the 5G based positioning instructions 208, the one or more processors 204 of the 5G based positioning system 102 are configured to receive and process the 5G signals and receive and process the position correction information for each of the multiple operators in a manner similar to that described above.

In some examples, the memory 206 optionally includes 5G operator comparison instructions 214. When executing the 5G operator comparison instructions 214, the one or more processors 204 are configured to compare the position determined using the 5G position information from a first operator with the position determined using the 5G position information from a second operator to detect excess mismatch. In some such examples, excess mismatch is detected when the difference in the position determined using the 5G position information and position correction information for operators differs by an amount that exceeds a threshold. In some examples, the threshold is predetermined based on safety requirements, accuracy thresholds, or other factors. In some examples, when the position determined using 5G position information and position correction information for two operators matches (for example, are within a threshold range of each other), and the position determined using 5G position information and position correction information from a third operator does not match the other positions, the 5G based positioning system 102 can output an error signal or alert indicating that 5G signals from the third operator are faulty. When only two operators are used and there is excess mismatch, then the 5G based positioning system 102 can output an error or alert to the navigation system of the vehicle 101 in addition to, or instead of, outputting a position of the vehicle 101 determined using the 5G signals.

In some examples, the 5G based positioning system 102 is configured to combine the 5G position information and position correction information from different operators to determine a position of the vehicle 101. In some examples, the 5G based positioning system 102 is configured to integrate the position determined using the 5G position information and position correction information of different operators. In some such examples, the 5G based positioning system 102 includes a Kalman filter or other filter than is configured to combine the positions using averaging, weights, filtering, etc.

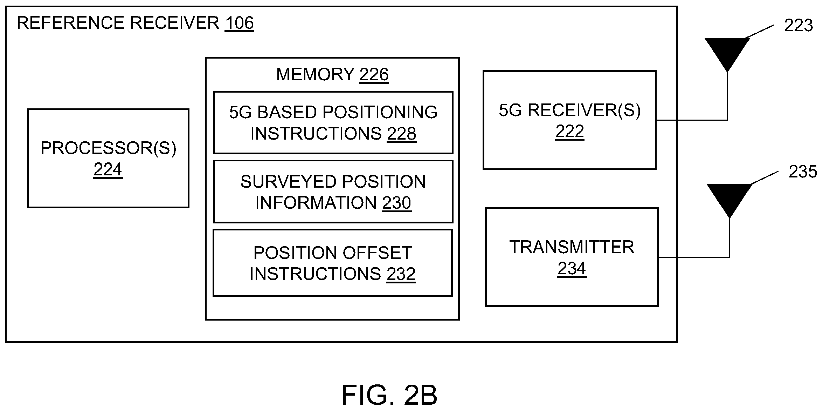

FIG. 2B is a block diagram of an example reference receiver 106. In the example shown in FIG. 2B, the reference receiver 106 includes one or more 5G receivers 222 and one or more processors 224 communicatively coupled to the one or more 5G receivers 222 and a memory 226.

In the example shown in FIG. 2B, the 5G receiver 222 is communicatively coupled to at least one antenna 223 and configured to wirelessly receive 5G signals from the 5G base stations 104 via the antenna 223. In some examples, the 5G receiver 222 is subscribed to a single operator and is configured to receive 5G signals from the single cellular operator. In such examples, the 5G receiver 222 and the antenna 223 are specifically configured to receive and process signals using the frequency band(s) and protocols for the single cellular operator.

In the example shown in FIG. 2B, the memory 226 includes 5G based positioning instructions 228. When executing the 5G based positioning instructions 228, the one or more processors 224 of the reference receiver 106 are configured to receive the 5G signals from the 5G receiver 222 and process the 5G signals to obtain the 5G position information. In some examples, processing the 5G signals includes demodulating, decoding, and otherwise processing the 5G signals to obtain 5G position information indicating a position of the 5G receiver 222 that is determined by one or more components of the network that includes the 5G base stations 104. In some examples, processing the 5G signals further includes transforming the 5G position information indicating a position of the 5G receiver 222 to a position of the reference receiver 106 that includes the 5G receiver 222. For example, the position of the 5G receiver 222 can be transformed to a position of the reference receiver 106 (or position of components of the reference receiver 106) based on a known relationship between the position of the 5G receiver 222 at the reference receiver 106 (or components of the reference receiver 106).

In the example shown in FIG. 2B, the memory 226 further includes position offset instructions 232. When executing the position offset instructions 232, the one or more processors 224 of the reference receiver 106 are configured to determine an offset between the position of the reference receiver 106 determined using 5G signals and a known position of the reference receiver 106. In some examples, the known position of the reference receiver 106 is a surveyed position of the reference receiver 106. The surveyed position of the reference receiver 106 can be stored in memory 226 as surveyed position information 230. In some examples, the offset between the position of the reference receiver 106 determined using 5G signals and a known position of the reference receiver 106 can include a latitude, a longitude, and/or an altitude offset.

In the example shown in FIG. 2B, the reference receiver 106 further includes a transmitter 234 communicatively coupled to at least one antenna 235 and configured to wirelessly transmit the determined position offset to a ground reference station 108 via the antenna 235. In some examples, the transmitter 234 and the antenna 235 are specifically configured to process and transmit signals using the frequency band(s) and protocols utilized by the ground reference station 108. In some such examples, the frequency band(s) and protocols utilized for communication with the ground reference station 108 are separate from and distinct from those utilized by the 5G base stations 104. In other examples, the reference receiver 106 includes the transmitter 234 without the antenna 235, and the reference receiver 106 is configured to transmit the determined position offset to a ground reference station 108 over a wired communication link.

As discussed above, in some examples, the reference receiver 106 is subscribed to multiple operators, and the 5G signals utilized by the system 100 are received from the 5G base stations 104 of the multiple operators. In such examples, the reference receiver 106 also includes additional 5G receivers 222 that are communicatively coupled to at least one additional antenna 223 and configured to wirelessly receive 5G signals from the plurality of 5G base stations 104 via the additional antenna 223. In some examples, the additional 5G receiver 222 is subscribed to a second operator that is different than the first operator and is configured to receive 5G signals from the second operator. In such examples, the additional 5G receiver 222 and the antenna 223 are specifically configured to receive and process signals using the frequency band(s) and protocols for the second operator.

When executing the 5G based positioning instructions 228 and the position offset instructions 232, the one or more processors 224 of the reference receiver 106 are configured to receive and process the 5G signals for each of the multiple operators in a manner similar to that described above.

In some examples, the memory 226 optionally includes 5G operator comparison instructions (not shown). When executing the 5G operator comparison instructions, the one or more processors 224 are configured to compare the position determined using the 5G position information from a first operator with the position determined using the 5G position information from a second operator to detect excess mismatch. In some such examples, excess mismatch is detected when the difference in the position determined using the 5G position information and position correction information for operators differs by an amount that exceeds a threshold. In some examples, the threshold is predetermined based on safety requirements, accuracy thresholds, or other factors. In some examples, when the position determined using 5G position information and position correction information for two operators matches (for example, are within a threshold range of each other), and the position determined using 5G position information and position correction information from a third operator does not match the other positions, the reference receiver 106 can output an error signal or alert indicating that 5G signals from the third operator are faulty. When only two operators are used and there is excess mismatch, then the reference receiver 106 can output an error or alert to the ground reference station 108 in addition to, or instead of, outputting position offsets determined using the 5G signals.

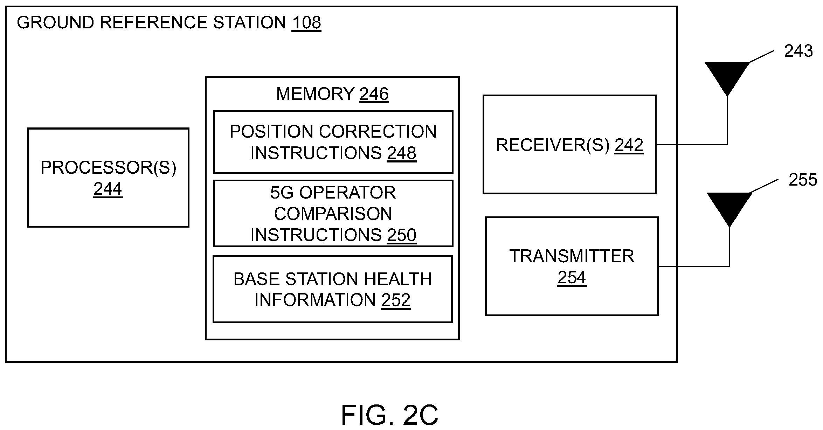

FIG. 2C is a block diagram of an example ground reference station 108. In the example shown in FIG. 2C, the ground reference station includes one or more receivers 242 and one or more processors 244 communicatively coupled to the one or more receivers 242 and a memory 246.

In the example shown in FIG. 2C, the receiver 242 is communicatively coupled to at least one antenna 243 and configured to wirelessly receive position offset information from the reference receivers 106 via the antenna 243. In some examples, the receiver 242 is configured to receive signals from each of the reference receivers 106. In such examples, the reference receivers 106 and the ground reference station 108 are configured to receive and process signals using the frequency band(s) and protocols. In some such examples, the frequency band(s) and protocols utilized for communication between the reference receivers 106 and the ground reference station 108 are separate from and distinct from those utilized by the 5G base stations 104. In other examples, the receivers 242 without the antenna 243, and the ground reference station 108 is configured to receive the determined position offset from the reference receivers 106 over wired communication links.

In the example shown in FIG. 2C, the memory 246 includes position correction instructions 248. When executing the position correction instructions 248, the one or more processors 244 are configured to generate position correction information from the position offset information from the reference receivers 106. In some examples, the one or more processors 244 are configured to combine the position offsets from the different reference receivers 106 using averaging, weights, filtering, etc. to determine overall position correction information to be sent to the 5G based positioning system 102. In some examples, the one or more processors 244 are configured to determine position correction information applicable to 5G position information from individual 5G base stations 104 based on the position offsets from the reference receivers 106. For example, the one or more processors 244 can combine the position offsets determined by the reference receivers 106 that received 5G position information from a particular 5G base station 104 and output position correction information to the 5G based positioning system 102 that is specific to each 5G base station 104. In other examples, the one or more processors 244 are configured to determine position correction information applicable to 5G position information from a particular operator. For example, the one or more processors 244 can combine the position offsets determined by the reference receivers 106 that received 5G position information from 5Gbase stations 104 of the particular operator and output position correction information to the 5G based positioning system 102 for each operator.

When executing the position correction instructions 248, the one or more processors 244 can also be configured to determine base station health information 252. In some examples, the one or more processors 244 are configured to determine health information for one or more of the 5G base stations 104 based on the determined offsets from the reference receivers 106. For example, if the determined position offsets for a particular base station 104 are above a threshold value, then it is determined that the signals from the 5G base station 104 are unreliable and that 5G base station 104 can be labeled as unavailable or faulty in the base station health information 252. Similarly, if the determined position offsets for a particular base station 104 are below a threshold value, then it is determined that the signals from the 5G base station 104 are reliable and that 5G base station 104 can be labeled as available or healthy in the base station health information 252. A similar approach could be used to provide operator health information based on the number of 5G base stations 104 for a particular operator that are considered available or not. In the example shown in FIG. 2C, the base station health information 252 is stored memory 246.

In the example shown in FIG. 2C, the ground reference station 108 further includes a transmitter 254 communicatively coupled to at least one antenna 255 and is configured to wirelessly transmit the determined position correction information to the 5G based positioning system 102 via the antenna 255. In some examples, the transmitter 254 and the antenna 255 are specifically configured to process and transmit signals using the frequency band(s) and protocols utilized by the 5G based positioning system 102. In some such examples, the frequency band(s) and protocols utilized for communication with the ground reference station 108 are separate from and distinct from those utilized by the 5G base stations 104.

As discussed above, in some examples, the 5G signals utilized by the system 100 are received from the 5G base stations 104 of the multiple operators. In such examples, when executing the position correction instructions 248, the one or more processors 244 of the ground reference station 108 are configured to receive and process the position offset information for each of the multiple operators in a manner similar to that described above.

In some examples, the memory 246 further includes 5G operator comparison instructions 250. When executing the 5G operator comparison instructions 250, the one or more processors 244 are configured to compare the position determined using the 5G position information from a first operator with the position determined using the 5G position information from a second operator to detect excess mismatch. In some such examples, excess mismatch is detected when the difference in the position determined using the 5G position information and position correction information for operators differs by an amount that exceeds a threshold. In some examples, the threshold is predetermined based on safety requirements, accuracy thresholds, or other factors. In some examples, when the position determined using 5G position information and position correction information for two operators matches (for example, are within a threshold range of each other), and the position determined using 5G position information and position correction information from a third operator does not match the other positions, the reference receiver 106 can output an error signal or alert indicating that 5G signals from the third operator are faulty. When only two operators are used and there is excess mismatch, then the reference receiver 106 can output an error or alert to the ground reference station 108 in addition to, or instead of, outputting position offsets determined using the 5G signals.

In some examples, the ground reference station 108 can include features and functionality similar to the reference receivers 106 (for example, 5G receiver, antenna, 5G based positioning instructions, position offset instructions, etc.). In such examples, the ground reference station can further include a 5G receiver communicatively coupled to at least one antenna and configured to wirelessly receive 5G signals from the 5G base stations 104 via one or more antennas. In some examples, the 5G receiver is subscribed to a single operator and is configured to receive 5G signals from the single cellular operator or the ground reference station 108 can include multiple 5G receivers that are subscribed to different operators. In such examples, each 5G receiver and antenna combination is specifically configured to receive and process signals using the frequency band(s) and protocols for a particular cellular operator.

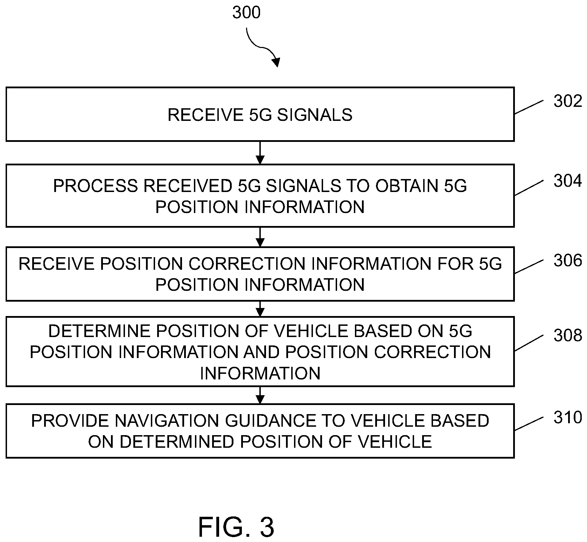

FIG. 3 illustrates a flow diagram of an example method 300 of 5G based navigation augmentation. The common features discussed above with respect to the example system in FIGS. 1-2C can include similar characteristics to those discussed with respect to method 300 and *vice versa.* In some examples, the blocks of the method 300 are performed by a 5G based positioning system 102.

The blocks of the flow diagram in FIG. 3 have been arranged in a generally sequential manner for ease of explanation; however, it is to be understood that this arrangement is merely exemplary, and it should be recognized that the processing associated with method 300 (and the blocks shown in FIG. 3) can occur in a different order (for example, where at least some of the processing associated with the blocks is performed in parallel in an event-driven manner).

The method 300 includes receiving 5G signals (block 302). The 5G signals are received from a plurality of 5G base stations that are distributed throughout an area. The 5G signals can be received by one or more 5G receivers and antennas. In some examples, the 5G signals are received from a single operator. In other examples, the 5G signals are received from multiple operators.

The method 300 further includes processing the received 5G signals to obtain 5G position information (block 304). In some examples, the 5G signals are processed in order to extract the 5G position information indicating a position of the 5G receiver as determined by the network including the 5G base station. For example, the processing can include down-conversion, filtering, demodulation, etc. In some examples, processing the 5G signals further includes transforming the 5G position information indicating a position of the receiver to a position of the vehicle that includes the receiver. For example, the position of the receiver can be transformed to a position of the vehicle (or position of components of the vehicle) based on a known relationship between the position of the receiver at the vehicle (or components of the vehicle).

The method 300 further includes receiving position correction information for the 5G position information (block 306). The position correction information includes corrections and/or error information for the 5G position information that is received from the 5Gbase stations. In some examples, the position correction information includes corrections to latitude, longitude, and/or altitude. In some examples, the position correction information is received from reference receivers and/or a ground reference station.

The method 300 further includes determining a position of the vehicle based on the 5G position information and the position correction information (block 308). In some examples, determining the position of the vehicle includes adjusting the 5G position information from the 5G base stations using the position correction information. For example, this can include adjusting a latitude, a longitude, and/or an altitude of the 5G position information based on the position correction information. In examples where 5G position information is received from multiple 5G base stations, determining the position of the vehicle includes combining the 5G position information, as adjusted with the position correction information, using averaging, weights, filtering, etc. to determine an overall position of the vehicle.

The method 300 further includes providing navigation guidance to the vehicle based on the determined position of the vehicle (block 310). In some examples, the navigation guidance provided depends on the type of vehicle and how the vehicle is piloted. In examples where a pilot is manually operating the vehicle, the navigation guidance can be provided via a display device to the pilot. In examples where the vehicle is operating autonomously, the navigation guidance can be provided via input to the navigation system. In some examples, providing navigation guidance to the vehicle includes providing landing vertical guidance and/or landing horizontal guidance to the vehicle. In some examples, providing navigation guidance to the vehicle includes providing navigation guidance while the vehicle is in the air (for example, low altitude flight where 5G signal availability is reliable). In some examples, providing navigation guidance to the vehicle includes providing navigation guidance while the vehicle is on the ground.

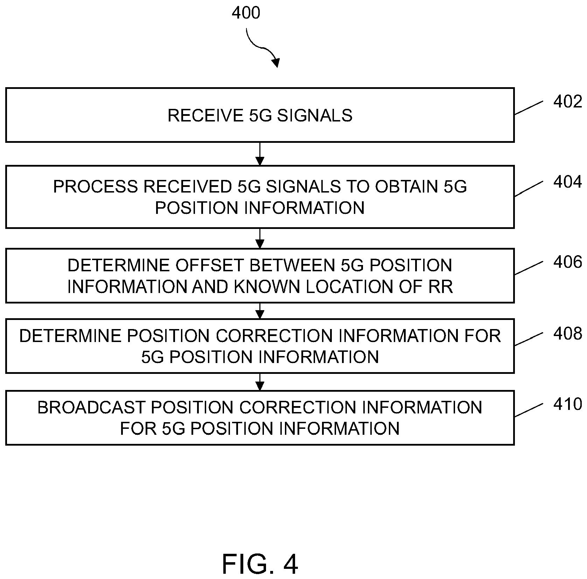

FIG. 4 illustrates a flow diagram of an example method 400 of determining and providing position correction information for 5G position information. The common features discussed above with respect to the example system and method in FIGS. 1-3 can include similar characteristics to those discussed with respect to method 400 and *vice versa.* In some examples, the blocks of the method 400 are performed by a reference receiver 106, a ground reference station 108, or a combination.

The blocks of the flow diagram in FIG. 4 have been arranged in a generally sequential manner for ease of explanation; however, it is to be understood that this arrangement is merely exemplary, and it should be recognized that the processing associated with method 400 (and the blocks shown in FIG. 4) can occur in a different order (for example, where at least some of the processing associated with the blocks is performed in parallel in an event-driven manner).

The method 400 includes receiving 5G signals (block 402). The 5G signals are received from a plurality of 5G base stations that are distributed throughout an area. The 5G signals can be received by one or more 5G receivers and antennas. In some examples, the 5G signals are received from a single operator. In other examples, the 5G signals are received from multiple operators.

The method 400 further includes processing the received 5G signals to obtain 5G position information (block 404). In some examples, the 5G signals are processed in order to extract the 5G position information indicating a position of the 5G receiver as determined by the network including the 5G base station. For example, the processing can include down-conversion, filtering, demodulation, etc. In some examples, processing the 5G signals further includes transforming the 5G position information indicating a position of the receiver to a position of the reference receiver or ground reference station that includes the receiver. For example, the position of the receiver can be transformed to a position of the reference receiver or ground reference station based on a known relationship between the position of the receiver within the reference receiver or ground reference station.

The method 400 further includes determining offset between processed 5G position information and known location of a reference receiver (block 406). In some examples, the known position of the reference receiver is a surveyed position of the reference receiver. In some examples, the determined offset between the position of the reference receiver determined using 5G signals and a known position of the reference receiver can include a latitude, a longitude, and/or an altitude offset.

The method 400 further includes determining position correction information for the 5G position information (block 408). In some examples, the position correction information is determined based on the determined offsets for each of the reference receivers in a particular area. In some examples, determining position correction information includes combining the determined offsets from the different reference receivers 106 using averaging, weights, filtering, etc. to determine overall position correction information. In some examples, determining position correction information includes determining position correction information that is applicable to 5G position information from individual 5G base stations based on the determined offsets. For example, this can include combining the determined offsets for the reference receivers that received 5G position information from a particular 5G base station and determining position correction information that is specific to each 5G base station. In other examples, determining position correction information includes determining position correction information that is applicable to 5G position information from a particular operator. For example, this can include combining the determined offsets for the reference receivers that received 5G position information from 5G base stations of the particular operator and determining position correction information that is specific to each operator. In some examples, determining position correction information also includes determining an error margin or confidence measurement based on the determined offsets.

The method 400 further includes broadcasting the position correction information for the 5G position information (block 410). In some examples, a ground reference station or a reference receiver is configured to broadcast the position correction information to a 5G based positioning system on a vehicle. In some examples, broadcasting is performed using a 5G transmitter. In other examples, broadcasting is performed using a different type of transmitter that will not interfere with the 5G signal transmissions by the 5G base station. In some examples, broadcasting occurs periodically and the frequency of the broadcast can be related to the frequency at which 5G position information is transmitted by the 5G base stations.

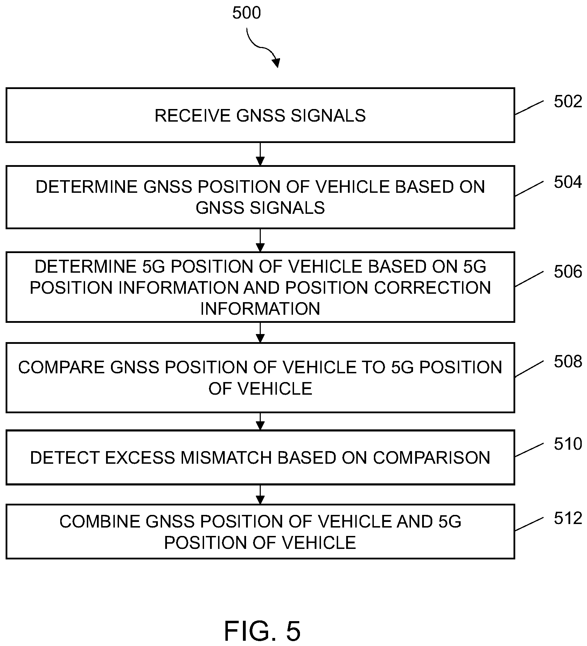

FIG. 5 illustrates a flow diagram of an example method 500 of detecting GNSS error or spoofing. The common features discussed above with respect to the example system and method in FIGS. 1-4 can include similar characteristics to those discussed with respect to method 500 and *vice versa.* In some examples, the blocks of the method 500 are performed by the 5G based positioning system 102.

The blocks of the flow diagram in FIG. 5 have been arranged in a generally sequential manner for ease of explanation; however, it is to be understood that this arrangement is merely exemplary, and it should be recognized that the processing associated with method 400 (and the blocks shown in FIG. 5) can occur in a different order (for example, where at least some of the processing associated with the blocks is performed in parallel in an event-driven manner).

The method 500 includes receiving GNSS signals (block 502). In some examples, the GNSS signals are received from a plurality of GNSS satellites. The GNSS signals can be received by one or more GNSS receivers and antennas. In some examples, the GNSS signals are received from a single constellation. In other examples, the GNSS signals are received from multiple constellations.

The method 500 further includes determining a GNSS position of the vehicle based on the received GNSS signals (block 504). The determination of a GNSS position of the vehicle can be performed using any methods known to those having skill in the art.

The method 500 further includes determining a 5G position of the vehicle based on received 5G signals and position correction information (block 506). In some examples, determining a 5G position of the vehicle based on received 5G signals and position correction information includes the features described above with respect to block 308.

The method 500 further includes comparing the determined GNSS position of the vehicle to the determined 5G position of the vehicle (block 508) and detecting excess mismatch and/or GNSS spoofing based on the comparison (block 510). In some examples, comparing the determined GNSS position of the vehicle to the determined 5G position of the vehicle includes determining the difference between the two positions. For example, determining a difference between the two positions can include determining a difference in the latitude, longitude, and/or altitude of the GNSS position and 5G position of the vehicle. In some examples, detecting excess mismatch and/or GNSS spoofing includes determining whether the difference between the two positions exceeds a threshold. In some examples, separate thresholds are used for latitude, longitude, and altitude, and detecting excess mismatch and/or GNSS spoofing includes detecting a difference that exceeds any of those thresholds.

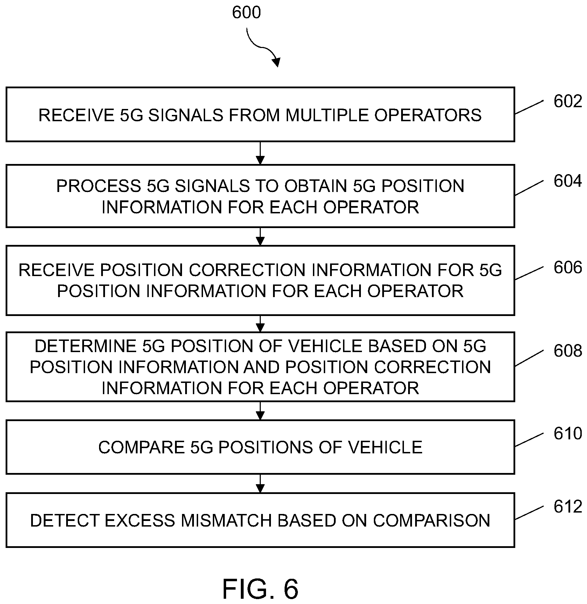

FIG. 6 illustrates a flow diagram of an example method 600 of multi-operator 5G based navigation augmentation. The common features discussed above with respect to the example system and method in FIGS. 1-5 can include similar characteristics to those discussed with respect to method 600 and *vice versa.* In some examples, the blocks of the method 600 are performed by the 5G based positioning system 102, the reference receiver 106, or the ground reference station 108.

The blocks of the flow diagram in FIG. 6 have been arranged in a generally sequential manner for ease of explanation; however, it is to be understood that this arrangement is merely exemplary, and it should be recognized that the processing associated with method 400 (and the blocks shown in FIG. 6) can occur in a different order (for example, where at least some of the processing associated with the blocks is performed in parallel in an event-driven manner).

The method 600 includes receiving 5G signals from multiple operators (block 602). The 5G signals are received from a plurality of 5G base stations from multiple operators that are distributed throughout an area. The 5G signals can be received by one or more 5G receivers and antennas.

The method 600 further includes processing the received 5G signals from the multiple operators to obtain 5G position information for each operator (block 604). In some examples, the 5G signals are processed in order to extract the 5G position information indicating a position of the 5G receiver as determined by the network including the 5G base station for each operator. For example, the processing can include down-conversion, filtering, demodulation, etc. In some examples, processing the 5G signals further includes transforming the 5G position information indicating a position of the receiver to a position of the vehicle that includes the receiver. For example, the position of the receiver can be transformed to a position of the vehicle (or position of components of the vehicle) based on a known relationship between the position of the receiver at the vehicle (or components of the vehicle).

The method 600 further includes receiving position correction information for the 5G position information from the multiple operators (block 606). The position correction information includes corrections and/or error information for the 5G position information that is received from the 5G base stations for each operator. In some examples, the position correction information includes corrections to latitude, longitude, and/or altitude. In some examples, the position correction information is received from reference receivers and/or a ground reference station.

The method 600 further includes determining a position of the vehicle based on the 5G position information and position correction information for each operator (block 608). In some examples, determining the position of the vehicle includes adjusting the 5G position information from the 5G base stations for each operator using the position correction information for each operator. For example, this can include adjusting a latitude, a longitude, and/or an altitude of the 5G position information for each operator based on the position correction information for each operator. In examples where 5G position information is received from multiple 5G base stations of the same operator, determining the position of the vehicle includes combining the 5G position information, as adjusted with the position correction information, from the 5G base stations of the same operator using averaging, weights, filtering, etc. to determine an overall position of the vehicle.

The method 600 further includes comparing the determined position of the vehicle for each operator (block 608) and detecting excess mismatch based on the comparison (block 610). In some examples, comparing the determined position of the vehicle for each operator includes determining the difference between the determined positions for different operators. For example, determining a difference between the two positions can include determining a difference in the latitude, longitude, and/or altitude of the determined positions of the vehicle for each operator. In some examples, detecting excess mismatch includes determining whether the difference between the determined positions exceeds a threshold. In some examples, separate thresholds are used for latitude, longitude, and altitude, and detecting excess mismatch includes detecting a difference that exceeds any of those thresholds.

By using the techniques described herein, the cost of a positioning and navigation augmentation system can be significantly reduced compared to current techniques. In some situations, the expensive ILS/GLS/LPV/MLS systems used today will not be needed at all when replaced with the systems and methods described above that utilize the 5G based positioning system, reference receivers, and ground reference station. The systems and methods described herein have sufficient accuracy, integrity, and availability to enable aircraft landing operations without the use of GNSS or other navigation measurements. Moreover, the systems and method described herein can be used to provide navigation guidance to vehicles in flight or vehicles on the ground as long as 5G networks are available in the area along the navigation route. In some situations, the systems and methods described herein can be used to replace radar that is currently installed on aircraft to avoid wing time damage, which can be heavy and expensive to implement.

While the examples described herein refer particularly to a 5G based positioning system, 5G base stations, 5G signals, and 5G position information, it should be understood that the systems and methods described herein could also be used with 5G evolution, 6G, and further generations of standards for mobile broadband that include similar positioning capabilities as for 5G. Thus, any reference to 5G herein is intended to also refer to equivalent or interchangeable further generation systems with similar positioning capabilities.

In various aspects, system elements, method steps, or examples described throughout this disclosure (such as the system, or components thereof, for example) may be implemented on one or more computer systems including a central processing unit (CPU), graphics processing unit (GPU), field programmable gate array (FPGA), application specific integrated circuit (ASIC) and/or similar devices comprising hardware executing code to realize those elements, processes, or examples, said code stored on a non-transient data storage device. These devices include or function with software programs, firmware, or other computer readable instructions for carrying out various methods, process tasks, calculations, and control functions.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

The methods and techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs).

### EXAMPLE EMBODIMENTS

Example 1 includes a method, comprising: receiving 5G signals from a plurality of 5G base stations; processing the received 5G signals from a plurality of 5Gbase stations to obtain 5G position information; receiving position correction information for the 5G position information from a ground reference station; determining a position of a vehicle based on the 5G position information and the position correction information; and providing navigation guidance to the vehicle based on the determined position of the vehicle.

Example 2 includes the method of Example 1, further comprising: receiving GNSS signals from a plurality of GNSS satellites; and determining a GNSS position of the vehicle based on the GNSS signals; comparing the position of the vehicle determined based on the 5G position information and the position correction information and the determined GNSS position; and detecting excess mismatch and/or GNSS spoofing based on the comparison.

Example 3 includes the method of any of Examples 1-2, wherein receiving 5G signals from a plurality of 5G base stations includes receiving 5G signals from two or more operators; the method further comprising comparing the 5G position information from the two or more operators to determine which operator is providing better 5G position information.

Example 4 includes the method of any of Examples 1-3, wherein the vehicle is an aircraft, wherein providing navigation guidance to the vehicle based on the determined position of the vehicle includes providing landing lateral guidance and landing vertical guidance to the vehicle based on the determined position of the vehicle, wherein the landing lateral guidance and the landing vertical guidance is further based on precision approach region data.

Example 5 includes the method of Example 4, wherein the landing lateral guidance is provided with A429 Label 173 and the landing vertical guidance is provided with A429 Label 174.

Example 6 includes the method of any of Examples 1-5, wherein the vehicle is an aircraft, wherein providing navigation guidance to the vehicle based on the determined position of the vehicle includes providing navigation guidance in the air to the vehicle along a navigation path between takeoff from an origin location and before landing at a destination location.

Example 7 includes the method of any of Examples 1-6, wherein providing navigation guidance to the vehicle based on the determined position of the vehicle includes providing navigation guidance on the ground based on the determined position of the vehicle, wherein the navigation guidance is further based on precision taxiing region data.

Example 8 includes the method of any of Examples 1-7, further comprising receiving health information about the plurality of 5G base stations, wherein determining the position of the vehicle is further based on the health information about the plurality of 5G base stations.

Example 9 includes a system, comprising: at least one receiver configured to: receive 5G signals from a plurality of 5G base stations; and receive position correction information for 5G position information from a ground reference station; one or more processors communicatively coupled to the at least one receiver, wherein the one or more processors are configured to: process the received 5G signals from a plurality of 5G base stations to obtain 5G position information; determine a position of a vehicle that includes the system based on the 5G position information and the position correction information; and provide navigation guidance to the vehicle that includes the system based on the determined position of the vehicle.

Example 10 includes the system of Example 9, further comprising at least one GNSS receiver configured to receive GNSS signals from a plurality of GNSS satellites; and wherein the one or more processors are communicatively coupled to the at least one GNSS receiver, wherein the one or more processors are further configured to: determine a GNSS position of the vehicle based on the GNSS signals; compare the position of the vehicle determined based on the 5G position information and the position correction information and the determined GNSS position; and detect excess mismatch and/or GNSS spoofing based on the comparison.

Example 11 includes the system of any of Examples 9-10, wherein the at least one receiver is configured to receive 5G signals from two or more operators; wherein the one or more processors are configured to compare the 5G position information from the two or more operators to determine which operator is providing better 5G position information.

Example 12 includes the system of any of Examples 9-11, wherein the vehicle that includes the system is an aircraft.

Example 13 includes the system of Example 12, wherein the one or more processors are configured to provide navigation guidance to the vehicle based on the determined position of the vehicle by providing landing lateral guidance and landing vertical guidance to the vehicle based on the determined position of the vehicle and precision approach region data.

Example 14 includes the system of Example 13, wherein the landing lateral guidance is provided with A429 Label 173 and the landing vertical guidance is provided with A429 Label 174.

Example 15 includes the system of any of Examples 13-14, wherein the system is configured to output the landing lateral guidance and the landing vertical guidance for display on a display device of the vehicle.

Example 16 includes the system of any of Examples 12-15, wherein the one or more processors are configured to provide wing tip warnings to the vehicle based on the determined position of the vehicle and obstacle data.

Example 17 includes the system of any of Examples 12-16, wherein the one or more processors are configured to provide navigation guidance to the vehicle based on the determined position of the vehicle by providing navigation guidance in the air to the vehicle along a navigation path between takeoff from an origin location and before landing at a destination location.

Example 18 includes the system of any of Examples 9-17, wherein the one or more processors are configured to provide navigation guidance to the vehicle based on the determined position of the vehicle by providing navigation guidance on the ground based on the determined position of the vehicle and precision taxiing region data.

Example 19 includes the system of any of Examples 9-18, wherein the at least one receiver is further configured to receive health information about the plurality of 5G base stations; wherein the one or more processors are configured to determine the position of the vehicle based on the health information about the plurality of 5G base stations.

Example 20 includes a system, comprising: a plurality of reference receivers each having a respective known location, wherein each reference receiver is configured to: receive 5G signals from a plurality of 5G base stations; process the received 5G signals from a plurality of 5G base stations to obtain 5G position information; and determine an offset between the 5G position information and the respective known location of the reference receiver; a ground reference station communicatively coupled to the plurality of reference receivers, wherein the ground reference station is configured to: receive the respective determined offset from each reference receiver of the plurality of reference receivers; determine position correction information for the 5G position information based on the received determined offsets from the plurality of reference receivers; and broadcast the position correction information for the 5G position information.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system (100), comprising:
at least one receiver (202, 210) configured to:
receive 5G signals from a plurality of 5G base stations (104); and
receive position correction information for 5G position information from a ground reference station (108);
one or more processors (204) communicatively coupled to the at least one receiver (202, 210), wherein the one or more processors (204) are configured to:
process the received 5G signals from a plurality of 5G base stations (104) to obtain 5G position information;
determine a position of a vehicle (101) that includes the system (100) based on the 5G position information and the position correction information; and
provide navigation guidance to the vehicle (101) that includes the system (100) based on the determined position of the vehicle (101).

2. The system (100) of claim 1, further comprising at least one GNSS receiver configured to receive GNSS signals from a plurality of GNSS satellites; and
wherein the one or more processors (204) are communicatively coupled to the at least one GNSS receiver, wherein the one or more processors (204) are further configured to:
determine a GNSS position of the vehicle based on the GNSS signals;
compare the position of the vehicle determined based on the 5G position information and the position correction information and the determined GNSS position; and
detect excess mismatch and/or GNSS spoofing based on the comparison.

3. The system (100) of any of claims 1-2, wherein the at least one receiver (202, 210) is configured to receive 5G signals from two or more operators;
wherein the one or more processors (204) are configured to compare the 5G position information from the two or more operators to determine which operator is providing better 5G position information.

4. The system (100) of any of claims 1-3, wherein the vehicle (101) that includes the system (100) is an aircraft, wherein the one or more processors (204) are configured to provide navigation guidance to the vehicle (101) based on the determined position of the vehicle (101) by providing landing lateral guidance and landing vertical guidance to the vehicle (101) based on the determined position of the vehicle (101) and precision approach region data.

5. The system (100) of claim 4, wherein the vehicle (101) that includes the system (100) is an aircraft, wherein the system (100) is configured to output the landing lateral guidance and the landing vertical guidance for display on a display device of the vehicle (101).

6. The system (100) of any of claims 1-5, wherein the vehicle (101) that includes the system (100) is an aircraft, wherein the one or more processors (204) are configured to provide wing tip warnings to the vehicle (101) based on the determined position of the vehicle (101) and obstacle data.

7. The system (100) of any of claims 1-6, wherein the vehicle (101) that includes the system (100) is an aircraft, wherein the one or more processors (204) are configured to provide navigation guidance to the vehicle (101) based on the determined position of the vehicle (101) by providing navigation guidance in the air to the vehicle (101) along a navigation path between takeoff from an origin location and before landing at a destination location.

8. The system (100) of any of claims 1-7, wherein the one or more processors (204) are configured to provide navigation guidance to the vehicle (101) based on the determined position of the vehicle (101) by providing navigation guidance on the ground based on the determined position of the vehicle (101) and precision taxiing region data.

9. The system (100) of any of claims 1-8, wherein the at least one receiver (202, 210) is further configured to receive health information about the plurality of 5G base stations;
wherein the one or more processors (204) are configured to determine the position of the vehicle (101) based on the health information about the plurality of 5G base stations.

10. The system (100) of any of claims 1-9, the system (100) further comprising:
a plurality of reference receivers (106) each having a respective known location, wherein each reference receiver (106) is configured to:
receive 5G signals from a plurality of 5G base stations (104);
process the received 5G signals from a plurality of 5G base stations (104) to obtain 5G position information; and
determine an offset between the 5G position information and the respective known location of the reference receiver (106);
the ground reference station (108), wherein the ground reference station (108) is communicatively coupled to the plurality of reference receivers (106), wherein the ground reference station (108) is configured to:
receive the respective determined offset from each reference receiver (106) of the plurality of reference receivers (106);
determine position correction information for the 5G position information based on the received determined offsets from the plurality of reference receivers (106); and
broadcast the position correction information for the 5G position information.
